# EUROPEAN PATENT APPLICATION

(11) **EP 4 478 453 A1**
(43) Date of publication of application: **18.12.2024**
(21) Application number: 23920609.7
(22) Date of filing: 24.03.2023
(51) Int. Cl.: H01M 4/36

(54) **LITHIUM MANGANESE IRON PHOSPHATE POSITIVE ELECTRODE MATERIAL, AND PREPARATION METHOD THEREFOR AND USE THEREOF**

(30) Priority: 10.02.2023 CN 202310122710
(71) Applicant: Eve Power Co., Ltd., Jingmen Hubei 448000 (CN)
(72) Inventor: DENG, Xiaohan, Hubei 448000 (CN); WEI, Haitao, Hubei 448000 (CN); ZHU, Weihua, Hubei 448000 (CN); CHENG, Hao, Hubei 448000 (CN)
(74) Representative: Petraz, Gilberto Luigi
(86) International application number: PCT/CN2023/083817
(87) International publication number: WO 2024/164404

(57) **Abstract**

Specifically disclosed in the present application is a lithium manganese iron phosphate positive electrode material, preparation method and application thereof. The lithium manganese iron phosphate positive electrode material includes a lithium manganese iron phosphate substrate and a coating layer on a surface of the lithium manganese iron phosphate substrate; the coating layer includes carbon quantum dots containing amino groups; and a mass ratio of manganese ions to carbon quantum dots containing amino groups is (4.5-5.5) : 1 in the lithium manganese iron phosphate positive electrode material.

## Description

### TECHNICAL FIELD

The present application relates to the technical field of lithium-ion batteries, in particular to a lithium manganese iron phosphate positive electrode material, a preparation method thereof and a use thereof.

### BACKGROUND

Phosphate-like materials of LiMPO₄ (M=Fe, Mn, Co, Ni and V, with a theoretical capacity of about 170mAh/g) with olivine structure are considered to be positive electrode materials for lithium-ion batteries with good application prospects. Olivine-based positive electrode materials provide advantages that are incomparable as compared with other positive electrode materials for lithium-ion batteries, such as stable structure, excellent cycling performance, good thermal stability, low cost, and no pollution to the environment. However, the inherent low ion mobility and conductivity of LiMPO₄ severely limits the disembedding, embedding and charge transfer rate of lithium ions in these materials. LiFePO₄ is one of the representatives of olivine-structured positive electrode materials, which may be synthesized by various routes by reducing the particle size of LiFePO₄ to the nanometer scale and surface coating with conductive carbon or other conductive metals as well as some oxides, thereby overcoming the deficiencies of poor conductivity and low mobility of LiFePO₄, and obtaining commercially viable LiFePO₄ positive electrode material. Lithium-ion battery positive electrode materials of LiFePO₄ by coating and doping the conductive phase are earliest widely used commercially.

In the crystal structure of LiFePO₄, the O atoms are arranged in a close hexagonal stacking; Fe and Li atoms form an octahedron with the O atoms respectively, both occupying the center of the octahedron; and P atoms form a tetrahedron with the O atoms. The presence of the polyanion PO₄³⁻ stabilizes the crystal structure but hinders the passage of electrons and ions, resulting in a low electronic and ionic conductivity of the LiFePO₄ material.

The redox potential of LiMnPO₄ material is about 4.1 V Compared with LiFePO₄ material with a potential of about 3.4 V, the energy density of LiMnPO₄ material is about 20% higher than that of LiFePO₄ material at the same specific capacity. Additionally, the LiMnPO₄ with a redox potential of 4.1 V is compatible with most of the liquid electrolytes currently in use and may compensate for the deficiencies of LiFePO₄.

By doping lithium iron phosphate materials with manganese to synthesize lithium manganese iron phosphate sosoloid materials, the energy density of lithium iron phosphate is improved, so that lithium manganese iron phosphate becomes an excellent energy storage material integrating high energy density and high safety. However, the ionic and electronic conductivity of lithium iron phosphate is reduced by doping lithium iron phosphate with high manganese, and the electrochemical properties of the material are dramatically reduced due to the Jahn-Teller effect caused by Mn³⁺ and the dissolution of Mn during the reaction process. Currently, the electrochemical performance of lithium manganese iron phosphate is mainly improved by controlling particle morphology, nanosizing and ion doping. Although carbon coating of lithium iron phosphate materials has been discussed thoroughly, however, with respect to lithium manganese iron phosphate materials, different methods of coating materials and the content of the coating materials are still issues worthy of improvement.

### SUMMARY

In order to improve manganese leaching out from lithium manganese iron phosphate and the Jahn-Teller effect, provided in the present application is a lithium manganese iron phosphate positive electrode material, a preparation method and an application thereof.

As a first aspect, provided in the present application is a lithium manganese iron phosphate positive electrode material, adopting technical solutions as follows.

A lithium manganese iron phosphate positive electrode material, in which the lithium manganese iron phosphate positive electrode material includes a lithium manganese iron phosphate substrate and a coating layer on a surface of the lithium manganese iron phosphate substrate; the coating layer includes carbon quantum dots containing amino groups; and a mass ratio of manganese ions to carbon quantum dots containing amino groups is (4.5-5.5) : 1 in the lithium manganese iron phosphate positive electrode material.

By adopting the technical solution mentioned above, since lithium manganese iron phosphate positive electrode material is coated with carbon quantum dots containing amino groups and the mass ratio of manganese ions to carbon quantum dots containing amino groups is regulated, manganese ion leaching out from lithium manganese iron phosphate material is greatly suppressed, and the damage to the SEI film of the negative electrode caused by manganese ion leaching out is reduced, thereby improving the cycling performance of lithium batteries. Carbon coating affects the capacity and polarization degree of the material and the length of the lithium manganese iron phosphate material, and when the mass ratio of manganese ions to carbon quantum dots containing amino groups is in an appropriate range, the efficiency of electron transfer is increased and the polarization degree is lowered, which improves the conductivity and the cycling performance of batteries made of lithium manganese iron phosphate materials. Since carbon quantum dots provide small-size properties similar to those of carbon nanomaterials, small-size, evenly coated and consistent shaped lithium manganese iron phosphate materials are obtained after the carbon quantum dots are coated on the surface of lithium manganese iron phosphate, which is conducive to the further enhancement of the conductivity of the lithium manganese iron phosphate materials. Furthermore, since the carbon quantum dots are rich in amino groups on the surface, the carbon quantum dots are able to stabilize the HF and water generated by the lithium battery in use, which reduces the damage caused by the HF and water to the various materials in the lithium battery, thereby further improving the conductivity and cycling performance of the battery.

In one implementation, the lithium manganese iron phosphate substrate is prepared by following steps: dissolving a lithium source, an iron source, a manganese source, and a phosphorus source in deionized water to obtain a mixed solution and adjusting pH of the mixed solution; then adding polyvinylpyrrolidone to obtain a lithium manganese iron phosphate precursor solution; heating the lithium manganese iron phosphate precursor solution; and drying to obtain a lithium manganese iron phosphate substrate.

In one implementation, the lithium source, the iron source, the manganese source, and the phosphorus source are lithium hydroxide, ferrous sulfate, manganese sulfate and phosphoric acid respectively.

In one implementation, a pH of the mixed solution is adjusted to 3.0-3.4.

By adopting the technical solution mentioned above, when the pH of the mixed solution is stabilized at 3.0-3.4, the reaction of ferrous sulphate with iron source and manganese source in the reaction system is promoted to obtain a more stable lithium manganese iron phosphate substrate, which improves the conductive cycling performance thereof.

In one implementation, a mass ratio of manganese to iron in the lithium manganese iron phosphate precursor solution is (5.5-6.5) : 4.

In one implementation, a mass ratio of manganese to iron in the lithium manganese iron phosphate precursor solution is 6 : 4.

By adopting the technical solution mentioned above, the content of manganese ions in the lithium manganese iron phosphate substrate obtained from the final preparation is controlled in an appropriate range, which reduces the negative impact on the stability of the lithium manganese iron phosphate positive electrode material due to the change of the manganese to iron ratio, so that the carbon quantum dots containing amino groups are able to maximally alleviate the damage of the manganese ions leaching out to the SEI film of the negative electrode material, which reduces the negative impact on the battery capacity due to the manganese ions leaching out, thereby improving the cycling performance of the battery.

In one implementation, a heating process of the lithium manganese iron phosphate precursor solution is carried out at a heating temperature of 160 °C - 200 °C and a heating duration of 10min-30min.

In one implementation, a mass ratio of the carbon quantum dots containing amino groups in the coating layer is 0.5-4%.

By adopting the technical solution mentioned above, when the content of carbon quantum dots in amino groups is in a range of 0.5-4%, the lithium manganese iron phosphate material provides excellent conductivity, high capacity per gram, and energy density, which may also maintain the ratio of manganese to iron in a reasonable range, thereby improving the stability and energy density of the lithium manganese iron phosphate material.

In one implementation, the carbon quantum dots containing amino groups are prepared by following steps: mixing an organic material containing amino groups with citric acid solution and preparing by hydrothermal reaction to obtain the carbon quantum dots containing amino groups.

In one implementation, the organic material containing amino groups is propanediamine.

In one implementation, a temperature in the hydrothermal reaction process is 160-180 °C and a reaction duration therein is 12-16 hours.

In one implementation, a mass ratio of propanediamine to citric acid solution is (1.5-2.5) : 1.

In one implementation, the ethanediamine solution and citric acid solution with a concentration of 0.5mol/L are prepared respectively before the hydrothermal reaction is carried out, and then the raw material solutions are mixed to form the reactant mixture, so that the carbon quantum dots are prepared by the reactant mixture undergoing a hydrothermal reaction.

In one implementation, a particle size of the carbon quantum dots containing amino groups is 1.5-3.5nm.

By adopting the technical solution mentioned above, carbon quantum dots containing amino groups are able to form a coating layer of uniform thickness and continuous density on the surface of the lithium manganese iron phosphate substrate, thereby increasing the conductivity of the battery while suppressing the leaching of manganese ions.

As a second aspect, provided in the present application is a preparation method of a lithium manganese iron phosphate positive electrode material, adopting technical solutions as follows.

A preparation method of a lithium manganese iron phosphate positive electrode material includes following steps.

Step one: Mixing the lithium manganese iron phosphate substrate with chitosan in a liquid phase; adding the carbon quantum dots containing amino groups simultaneously; and spray-drying to obtain coated lithium manganese iron phosphate powder.

Step two: Drying and grinding the coated lithium manganese iron phosphate powder to obtain an organic polymer-coated lithium manganese iron phosphate precursor; warming up and cooling down the organic polymer-coated lithium manganese iron phosphate precursor to obtain a positive electrode material of lithium manganese iron phosphate powder coated with carbon quantum dots.

In one implementation, in a process of heating up and cooling down the organic polymer-coated lithium manganese iron phosphate precursor, the temperature is first raised to 500 °C - 900 °C at a heating speed of 1 °C/min to 35 °C/min, then thermally insulated and preserved for 1 hour to 16 hours, and then cooled down to room temperature at a cooling speed of 1 °C/min to 35 °C/min.

By adopting the technical solution mentioned above, the process is simple and easy to produce, and the reaction process is controlled at an appropriate heating and cooling rate, so as to form a coating layer with uniform thickness and continuous density on the surface of lithium manganese iron phosphate positive electrode material, which reduces manganese ion leaching and improves the conductivity and cycling performance of the battery.

As a third aspect, provided in the present application is a positive electrode sheet, adopting technical solutions as follows.

A positive electrode sheet, in which the positive electrode sheet includes a lithium manganese iron phosphate positive electrode material mentioned above.

As a fourth aspect, provided in the present application is a lithium battery, adopting technical solutions as follows.

A lithium battery includes a positive electrode sheet and a negative electrode sheet, the positive electrode sheet including the positive electrode material mentioned above and the positive electrode material being the lithium manganese iron phosphate positive electrode material mentioned above.

By adopting the technical solution mentioned above, a lithium battery with excellent conductivity and cycling performance is prepared.

### BRIEF DESCRIPTION OF THE DRAWINGS

Fig. 1 is an SEM scan of the positive electrode material prepared by Contrast Example 1 of the present application.
Fig. 2 is an SEM scan of the positive electrode material prepared by Example 3 of the present application.
Fig. 3 is a graph of the Direct Current Internal Resistance (hereinafter referred to as DCIR) curves of the positive electrode material prepared by Example 3 and Contrast Example 1 of the present application.

### DETAILED DESCRIPTION

Unless otherwise specified, all values indicating amounts of compositions, reaction conditions, and the like used in the specification and the claims are to be understood as being modified by the term "approximately". Thus, unless indicated on the contrary, the numerical parameters illustrated herein are approximations capable of being varied according to the required performance to be obtained.

As used herein, "and/or" refers to one or all of the referenced elements.

As used herein, the terms "including" and "comprising" covers cases where only the referenced elements are present, as well as cases where, in addition to the referenced elements, there are other elements that are not referenced.

Unless otherwise specified, all percentages in the present application are mass percentages.

Unless otherwise specified, terms of "one", "a", "an" and "the" as used in the present specification are intended to include "at least one" or "one or more". For example, "a composition" means one or more compositions, so that more than one composition may be considered and may be adopted or used in the implementation of the described examples.

### Preparation Examples

### Preparation of lithium manganese iron phosphate substrates

In the present Preparation Examples, the mass concentration of phosphoric acid was 10-20%.

### Preparation Example 1

A lithium manganese iron phosphate substrate was prepared by the following steps:

Lithium hydroxide, ferrous sulfate, manganese sulfate, and phosphoric acid were dissolved in deionized water at a molar ratio of 0.55 : 0.35 : 0.65 : 1 to obtain a mixed solution, and the pH value of the mixed solution was adjusted to 3.0; polyvinylpyrrolidone was added therein to obtain a lithium manganese iron phosphate precursor solution with a manganese to iron mass ratio of 5.5 : 4; and the lithium manganese iron phosphate precursor solution was heated at 160 °C for 30 min and then was dried to obtain a lithium manganese iron phosphate substrate.

### Preparation Example 2

A lithium manganese iron phosphate substrate is prepared by the following steps:
Lithium hydroxide, ferrous sulfate, manganese sulfate, and phosphoric acid were dissolved in deionized water at a molar ratio of 0.55 : 0.35 : 0.65 : 1 to obtain a mixed solution, and the pH value of the mixed solution was adjusted to 3.4; polyvinylpyrrolidone was added to obtain a lithium manganese iron phosphate precursor solution with a manganese to iron mass ratio of 6.5 : 4; and the lithium manganese iron phosphate precursor solution was heated at 200 °C for 10 min and then was dried to obtain a lithium manganese iron phosphate substrate.

### Preparation Example 3

A lithium manganese iron phosphate substrate is prepared by the following steps:
Lithium hydroxide, ferrous sulfate, manganese sulfate, and phosphoric acid were dissolved in deionized water at a molar ratio of 0.55 : 0.35 : 0.65 : 1 to obtain a mixed solution, and the pH value of the mixed solution was adjusted to 3.2; polyvinylpyrrolidone was added to obtain a lithium manganese iron phosphate precursor solution with a manganese to iron mass ratio of 6 : 4; and the lithium manganese iron phosphate precursor solution was heated at 180 °C for 20 min and then was dried to obtain a lithium manganese iron phosphate substrate.

### Preparation Example 4

A lithium manganese iron phosphate substrate is prepared by the following steps:
Lithium hydroxide, ferrous sulfate, manganese sulfate, and phosphoric acid were dissolved in deionized water at a molar ratio of 0.55 : 0.35 : 0.65 : 1 to obtain a mixed solution, and the pH value of the mixed solution was adjusted to 3.3; polyvinylpyrrolidone was added to obtain a lithium manganese iron phosphate precursor solution with a manganese to iron mass ratio of 5.8 : 4; and the lithium manganese iron phosphate precursor solution was heated at 175 °C for 25 min and then was dried to obtain a lithium manganese iron phosphate substrate.

### Preparation Example 5

A lithium manganese iron phosphate substrate differs from the Preparation Example 3 in that the heating process was carried out at a temperature of 150 °C to obtain the lithium manganese iron phosphate substrate.

### Preparation Example 6

A lithium manganese iron phosphate substrate differs from the Preparation Example 3 in that the heating process was carried out at a temperature of 210 °C.

### Preparation Example 7

A lithium manganese iron phosphate substrate differs from the Preparation Example 3 in that the pH during heating was 2.6.

### Preparation Example 8

A lithium manganese iron phosphate substrate differs from the Preparation Example 3 in that the pH during heating was 3.9 to obtain the lithium manganese iron phosphate substrate.

### Preparation Example 9

A lithium manganese iron phosphate substrate differs from the Preparation Example 3 in that the mass ratio of manganese to iron in the lithium manganese iron phosphate precursor solution was 3 : 7.

### Preparation Example 10

A lithium manganese iron phosphate substrate differs from the Preparation Example 3 in that the mass ratio of manganese to iron in the lithium manganese iron phosphate precursor solution was 7 : 3.

### Preparation examples of carbon quantum dots containing amino groups

### Preparation Example 11

A carbon quantum dot containing an amino group is prepared by the following steps:
Propanediamine solution and citric acid solution at a concentration of 0.5 mol/L were separately prepared; the propanediamine solution was mixed with the citric acid solution in accordance with a mass ratio of 1.5 : 1 to form a reactant mixture; the reactant mixture was hydrothermally reacted for 16 hours at 160 °C; the solution after the hydrothermal reaction was passed through a filter film with a pore size of 10nm so as to obtain the solution of carbon quantum dots; and the carbon quantum dots containing amino groups with a particle size of 1.5-3.5 nm were obtained by freeze-drying subsequently.

### Preparation Example 12

A carbon quantum dot containing an amino group is prepared by the following steps:
Propanediamine solution and citric acid solution at a concentration of 0.5 mol/L were separately prepared; the propanediamine solution was mixed with the citric acid solution in accordance with a mass ratio of 2.5 : 1 to form a reactant mixture; the reactant mixture was hydrothermally reacted for 12 hours at 180 °C; the solution after the hydrothermal reaction was passed through a filter film with a pore size of 10nm so as to obtain the solution of carbon quantum dots; and the carbon quantum dots containing amino groups with a particle size of 1.5-3.5 nm were obtained by freeze-drying subsequently.

### Preparation Example 13

A carbon quantum dot containing an amino group is prepared by the following steps:
Propanediamine solution and citric acid solution at a concentration of 0.5 mol/L were separately prepared; the propanediamine solution was mixed with the citric acid solution in accordance with a mass ratio of 2 : 1 to form a reactant mixture; the reactant mixture was hydrothermally reacted for 14 hours at 170 °C; the solution after the hydrothermal reaction was passed through a filter film with a pore size of 10nm so as to obtain the solution of carbon quantum dots; and the carbon quantum dots containing amino groups with a particle size of 1.5-3.5 nm were obtained by freeze-drying subsequently.

### Preparation Example 14

A carbon quantum dot containing an amino group is prepared by the following steps:
Propanediamine solution and citric acid solution at a concentration of 0.5 mol/L were separately prepared; the propanediamine solution was mixed with the citric acid solution in accordance with a mass ratio of 2 : 1 to form a reactant mixture; the reactant mixture was hydrothermally reacted for 15 hours at 175 °C; the solution after the hydrothermal reaction was passed through a filter film with a pore size of 10nm so as to obtain the solution of carbon quantum dots; and the carbon quantum dots containing amino groups with a particle size of 1.5-3.5 nm were obtained by freeze-drying subsequently.

### Preparation Example 15

A carbon quantum dot containing an amino group differs from Preparation Example 13 in that the mass ratio of propanediamine solution to citric acid solution in the preparation process was 1 : 1, and carbon quantum dots containing amino groups with a particle size of 1.0-1.5 nm were obtained.

### Preparation Example 16

A carbon quantum dot containing an amino group differs from Preparation Example 13 in that the mass ratio of propanediamine solution to citric acid solution in the preparation process was 3 : 1, and carbon quantum dots containing amino groups with a particle size of 3.5-4.5 nm were obtained.

### Preparation Example 17

A carbon quantum dot containing an amino group differs from Preparation Example 13 in that the temperature of the hydrothermal reaction during preparation was 100 °C, and carbon quantum dots containing amino groups with a particle size of 3.5-4nm were obtained.

### Preparation Example 18

A carbon quantum dot containing an amino group differs from Preparation Example 13 in that the temperature of the hydrothermal reaction during preparation was 200 °C, and carbon quantum dots containing amino groups with a particle size of 0.7-1.5 nm were obtained.

### Examples

### Example 1

### 1. Preparation of the lithium manganese iron phosphate positive electrode material

A lithium manganese iron phosphate positive electrode material was prepared by the following steps.

Step one: the lithium manganese iron phosphate substrate prepared by the Preparation Example 1 was mxed with chitosan in a liquid phase; the carbon quantum dots containing amino groups prepared by the Preparation Example 11 were added simultaneously; and it was spray-dried to obtain coated lithium manganese iron phosphate powder.

Step two: the coated lithium manganese iron phosphate powder was dried and ground to obtain an organic polymer-coated lithium manganese iron phosphate precursor; the organic polymer-coated lithium manganese iron phosphate precursor was heated to 500 °C at a rate of 1 °C/min, thermally insulated and kept for 1 hour, and the organic polymer-coated lithium manganese iron phosphate precursor was cooled down to room temperature at a rate of 35 °C/min to obtain a positive electrode material of lithium manganese iron phosphate powder coated with carbon quantum dots. In the lithium manganese iron phosphate positive electrode material, the mass ratio of carbon quantum dots containing amino groups in the coating layer was 0.8%, and the mass ratio of manganese ions to carbon quantum dots containing amino groups was 5.2 : 1.

### 2. Assembly of pouch cell

The lithium manganese iron phosphate powder positive electrode material coated with carbon quantum dots, Conductive carbon black Super P, and Polvvinvlidene fluoride (PVDF) were mixed in the mass ratio = 8 : 1 : 1 with an appropriate amount of NMP solvent to prepare an electrode slurry, which was then evenly coated on a 12µm aluminum foil. Then, it was put into a vacuum drying oven to be dried at 80-120°C for a whole night, and the positive electrode sheet of 59*45mm was prepared by a slicer and assembled in a vacuum glove box filled with argon gas for the pouch cell.

### Example 2

A pouch cell was prepared according to the method of Example 1, and the difference between the present example and Example 1 was in the preparation of the lithium manganese iron phosphate positive electrode material.

A lithium manganese iron phosphate positive electrode material was prepared by the following steps.

Step one: the lithium manganese iron phosphate substrate prepared by the Preparation Example 2 was mixed with chitosan in a liquid phase; the carbon quantum dots containing amino groups prepared by the Preparation Example 12 were added simultaneously; and it was spray-dried to obtain coated lithium manganese iron phosphate powder.

Step two: the coated lithium manganese iron phosphate powder was dried and ground to obtain an organic polymer-coated lithium manganese iron phosphate precursor; the organic polymer-coated lithium manganese iron phosphate precursor was heated to 900 °C at a rate of 35 °C/min, thermally insulated and kept for 16 hours, and the organic polymer-coated lithium manganese iron phosphate precursor was cooled down to room temperature at a rate of 1 °C/min to obtain a positive electrode material of lithium manganese iron phosphate powder coated with carbon quantum dots. In the lithium manganese iron phosphate positive electrode material, the mass ratio of carbon quantum dots containing amino groups in the coating layer was 3.8%, and the mass ratio of manganese ions to carbon quantum dots containing amino groups was 4.8 : 1.

### Example 3

A flexible pack battery was prepared according to the method of Example 1, and the difference between the present example and Example 1 was in the preparation of the lithium manganese iron phosphate positive electrode material.

A lithium manganese iron phosphate positive electrode material was prepared by the following steps.

Step one: the lithium manganese iron phosphate substrate prepared by the Preparation Example 3 was mixed with chitosan in a liquid phase; the carbon quantum dots containing amino groups prepared by the Preparation Example 13 were added simultaneously; and it was spray-dried to obtain coated lithium manganese iron phosphate powder.

Step two: the coated lithium manganese iron phosphate powder was dried and ground to obtain an organic polymer-coated lithium manganese iron phosphate precursor; the organic polymer-coated lithium manganese iron phosphate precursor was heated to 700 °C at a rate of 18 °C/min, thermally insulated and kept for 8 hours, and the organic polymer-coated lithium manganese iron phosphate precursor was cooled down to room temperature at a rate of 17 °C/min to obtain a positive electrode material of lithium manganese iron phosphate powder coated with carbon quantum dots. In the lithium manganese iron phosphate positive electrode material, the mass ratio of carbon quantum dots containing amino groups in the coating layer was 0.5%, and the mass ratio of manganese ions to carbon quantum dots containing amino groups was 5.5 : 1.

### Example 4

A pouch cell was prepared according to the method of Example 1, and the difference between the present example and Example 1 was in the preparation of the lithium manganese iron phosphate positive electrode material.

A lithium manganese iron phosphate positive electrode material was prepared by the following steps.

Step one: the lithium manganese iron phosphate substrate prepared by the Preparation Example 4 was mixed with chitosan in a liquid phase; the carbon quantum dots containing amino groups prepared by the Preparation Example 14 were added simultaneously; and it was spray-dried to obtain coated lithium manganese iron phosphate powder.

Step two: the coated lithium manganese iron phosphate powder was dried and ground to obtain an organic polymer-coated lithium manganese iron phosphate precursor; the organic polymer-coated lithium manganese iron phosphate precursor was heated to 800°C at a rate of 20°C/min, thermally insulated and kept for 10 hours, and the organic polymer-coated lithium manganese iron phosphate precursor was cooled down to room temperature at a rate of 15°C/min to obtain a positive electrode material of lithium manganese iron phosphate powder coated with carbon quantum dots. In the lithium manganese iron phosphate positive electrode material, the mass ratio of carbon quantum dots containing amino groups in the coating layer was 4%, and the mass ratio of manganese ions to carbon quantum dots containing amino groups was 4.5 : 1.

### Example 5

A lithium manganese iron phosphate positive electrode material differs from Example 3 in that the lithium manganese iron phosphate substrate used in Step 1 was prepared by Preparation Example 5.

### Example 6

A lithium manganese iron phosphate positive electrode material differs from Example 3 in that the lithium manganese iron phosphate substrate used in Step 1 was prepared by Preparation Example 6.

### Example 7

A lithium manganese iron phosphate positive electrode material differs from Example 3 in that the lithium manganese iron phosphate substrate used in Step 1 was prepared by Preparation Example 7.

### Example 8

A lithium manganese iron phosphate positive electrode material differs from Example 3 in that the lithium manganese iron phosphate substrate used in Step 1 was prepared by Preparation Example 8.

### Example 9

A lithium manganese iron phosphate positive electrode material differs from Example 3 in that the lithium manganese iron phosphate substrate used in Step 1 was prepared by Preparation Example 9.

### Example 10

A lithium manganese iron phosphate positive electrode material differs from Example 3 in that the lithium manganese iron phosphate substrate used in Step 1 was prepared by Preparation Example 10.

### Example 11

A lithium manganese iron phosphate positive electrode material differs from Example 3 in that the carbon quantum dots containing amino groups used in Step 1 were prepared by Preparation Example 15.

### Example 12

A lithium manganese iron phosphate positive electrode material differs from Example 3 in that the carbon quantum dots containing amino groups used in Step 1 were prepared by Preparation Example 16.

### Example 13

A lithium manganese iron phosphate positive electrode material differs from Example 3 in that the carbon quantum dots containing amino groups used in Step 1 were prepared by Preparation Example 17.

### Example 14

A lithium manganese iron phosphate positive electrode material differs from Example 3 in that the carbon quantum dots containing amino groups used in Step 1 were prepared by Preparation Example 18.

### Example 15

A lithium manganese iron phosphate positive electrode material differs from Example 3 in that the organic polymer-coated lithium manganese iron phosphate precursor in step 2 was heated at a rate of 70 °C/min.

### Example 16

A lithium manganese iron phosphate positive electrode material differs from Example 3 in that the cooling rate in the cooling process of step 2 was 70 °C/min.

### Contrast Examples

### Contrast Example 1

A lithium manganese iron phosphate positive electrode material differs from Example 3 in that an uncoated lithium manganese iron phosphate substrate with equal weight was used in the preparation of the electrode slurry.

### Contrast Example 2

A lithium manganese iron phosphate positive electrode material differs from Example 3 in that amorphous carbon coated lithium manganese iron phosphate powder positive electrode material was prepared by replacing carbon quantum dots with amorphous carbon.

### Contrast Example 3

A lithium manganese iron phosphate positive electrode material differs from Example 3 in that the mass ratio of carbon quantum dots containing amino groups in the coating layer was 0.5%, and the mass ratio of manganese ions to carbon quantum dots containing amino groups was 6: 1.

### Contrast Example 4

A lithium manganese iron phosphate positive electrode material differs from Example 3 in that the mass ratio of carbon quantum dots containing amino groups in the coating layer was 2%, and the mass ratio of manganese ions to carbon quantum dots containing amino groups was 4: 1.

### Testing Method

### 1. SEM Test

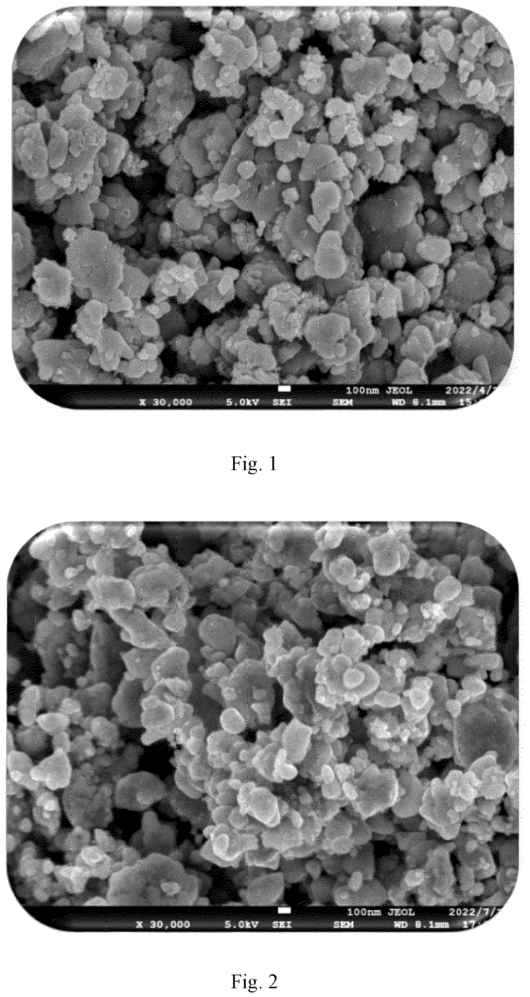

SEM scanning test was carried out on the positive electrode material prepared in Example 3 and Contrast Example 1, in which the testing method was as follows: the positive electrode sheet after coating and cold-pressing was sliced into samples with a size of 10mm×10mm, and the sample was tested by adjusting the magnification of the electron microscope at a magnification of 3000x; SEM images showing the surface topography of the sample were obtained as shown in Fig. 2 and Fig. 1, and it was known by the topography analysis of the SEM image, as shown in Fig. 2, the positive electrode material after coating provides a high crystal strength, a high degree of structural regularity and a small amount of amorphous impurities.

### 2. DCIR Test

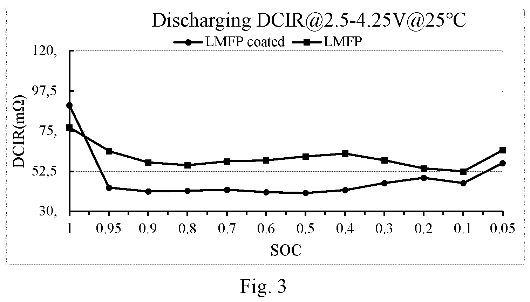

DCIR scanning test was carried out on the positive electrode material prepared by Example 3 and Contrast Example 1, and the testing method was as follows: the DCIR value after discharging at a constant current of 1C for 30 seconds was tested at 25°C in an environment where the State of Charge (SOC) of the battery capacity was provided in a range of 100-5% according to a gradient of 5-10% at intervals for different battery capacities, and the DCIR curves were obtained as shown in Fig. 3.

### 3. Resistance Test

Impedance tests were carried out on the batteries prepared in Examples 1-16 and Contrast Examples 1-4, and the testing method was as follows: the lithium-ion battery, which was the test object, was subjected to the following test operations at 25°C: (1) shelving for 5 minutes; (2) discharging at constant current of 0.5C to 3.0 V; (3) shelving for 5 minutes; (4) charging at constant voltage and constant current of 0.5C to 4.2 V, with the cut-off current of 0.05C; (5) shelving for 60 minutes; (6) The voltage U1 was measured by discharging at I1=0.2C for 10 seconds, and the voltage U2 was measured by discharging at I2=1.0C for 1 second. DC internal resistance = (U1- U2)/(I2-I1), and the test data were recorded in Table 1.

### 4. Battery Cycling Performance Test

The batteries prepared in Examples 1-16 and Contrast Examples 1-4 were tested for 0.33C/0.33C and 1C/1C cycling performance, respectively, and the lithium-ion batteries prepared were subjected to a full charge/discharge cycling test for 1,400 cycles, and the capacity retention rate was recorded. The test data were recorded in Table 1.

**Table 1**

| | Conductivity | Capacity Retention Rate (%) | |
|---|---|---|---|
| Examples / Contrast Examples | Resistance (mΩ) | 0.33C/0.33C cycling | 1C/1C cycling |
| Example 1 | 42.7 | 83 | 79.9 |
| Example 2 | 42.3 | 86 | 83.4 |
| Example 3 | 42.1 | 85 | 82.9 |
| Example 4 | 42.5 | 84 | 81.9 |
| Example 5 | 42.1 | 82 | 76.4 |
| Example 6 | 41.3 | 83 | 79.3 |
| Example 7 | 41.6 | 80 | 79.5 |
| Example 8 | 41.9 | 81 | 78.9 |
| Example 9 | 43.1 | 79 | 75.2 |
| Example 10 | 43.3 | 76 | 74.9 |
| Example 11 | 44.7 | 72 | 69.4 |
| Example 12 | 43.9 | 74 | 73.2 |
| Example 13 | 44.9 | 71 | 68.2 |
| Example 14 | 45.3 | 70 | 68.6 |
| Example 15 | 43.5 | 77 | 74.7 |
| Example 16 | 43.7 | 76 | 73.8 |
| Contrast Example 1 | 60.7 | 50 | 47.3 |
| Contrast Example 2 | 63.2 | 58 | 55.4 |
| Contrast Example 3 | 52.1 | 68 | 65.3 |
| Contrast Example 4 | 53.2 | 65 | 62.7 |

In conjunction with Examples 1-8 and Table 1, it is evident that when the temperature parameter and pH are changed during the preparation of lithium manganese iron phosphate, the content of manganese ions in the lithium manganese iron phosphate substrate is decreased or increased to a certain extent, thereby decreasing or increasing the manganese to iron ratio in the lithium manganese iron phosphate material, and decreasing or increasing the manganese ions to carbon quantum dots mass ratio in the lithium manganese iron phosphate material. When the mass ratio of manganese ions to carbon quantum dots is too low, the coating layer is able to alleviate the leaching out phenomenon of manganese ions effectively; however, due to the decrease in the energy density of lithium manganese iron phosphate material, it is manifested as a decrease in the cycling performance and conductivity performance of batteries using lithium manganese iron phosphate material in general. When the mass ratio of manganese ions to carbon quantum dots is too high, the coating layer containing carbon quantum dots provides a limited effect on suppressing the leaching out of manganese ions, so that the lithium manganese iron phosphate material still undergoes the manganese leaching in use, which leads to a negative impact on the cycling performance and conductivity performance of the battery.

In conjunction with Examples 3, 9-10 and Table 1, it is evident that in the lithium manganese iron phosphate material, when the content of manganese ions is too low or too high, the mass ratio of manganese ions to carbon quantum dots is smaller or larger compared to the mass ratio of manganese ions to carbon quantum dots in Examples 5-8. As a result, the cycling performance and conductivity performance of the batteries prepared in Examples 9-10 are significantly deteriorated.

In conjunction with Examples 3, 11-14 and Table 1, it is evident that when the mass ratio of propanediamine to citric acid and the temperature of the hydrothermal reaction are too high or too low, the conductivity performance of the battery is reduced. When the mass ratio of propanediamine to citric acid or the temperature of the hydrothermal reaction is too high or too low, the particle size of carbon quantum dots is not uniformly distributed, which is not conducive to the formation of a coating layer of uniform thickness and continuous density on the surface of lithium manganese iron phosphate substrate, which reduces the suppression rate of the coating layer on the leaching of manganese ions and decreases the suppression effect on the Jahn-Teller effect.

In conjunction with Examples 3, Contrast Examples 1-2 and Table 1, it is evident that the conductivity performance and cycling performance of Contrast Example 1 and Contrast Example 2 are significantly decreased, and the conductivity performance and cycling performance of Contrast Example 1 is lower than that of Contrast Example 2. Byproducts such as HF and water are produced during the charging and discharging process of the battery, and these byproducts play a certain corrosive role on the positive electrode sheet, while the carbon quantum dots modified by amino groups are effective in suppressing the corrosion of the byproducts of the battery reaction such as HF and water on the positive electrode sheet, which improves the cycling performance of the pouch cells. In conjunction with Fig. 3, it is evident that the Jahn-Teller disproportionation reaction is triggered due to the leaching of manganese from the uncoated LiMnFePO₄ substrate, and by coating the LiMnFePO₄ material, the DCIR protrusion may be smoothed out and the leaching of manganese may be alleviated, so as to improve the conductivity performance of the material.

In conjunction with Examples 3, Contrast Examples 3-4 and Table 1, it is evident that when the mass ratio of carbon quantum dots in the coating layer is too high or too low, the conductivity performance and cycling performance of lithium manganese iron phosphate may be negatively affected, in which excessive carbon quantum dots may lead to the segregation of carbon particles, which may hinder the electron transfer and lower the conductivity of the material. In other words, it is not the case that the higher the content of carbon quantum dots containing amino groups, the better the suppression of the leaching of manganese ions from lithium manganese iron phosphate, since the concentration effect plays an important role in the performance of carbon quantum dots.

## Claims

1. A lithium manganese iron phosphate positive electrode material, wherein the lithium manganese iron phosphate positive electrode material comprises a lithium manganese iron phosphate substrate and a coating layer on a surface of the lithium manganese iron phosphate substrate; the coating layer comprises carbon quantum dots containing amino groups; and a mass ratio of manganese ions to carbon quantum dots containing amino groups is (4.5-5.5) : 1 in the lithium manganese iron phosphate positive electrode material.

2. The lithium manganese iron phosphate positive electrode material according to claim 1, wherein the lithium manganese iron phosphate substrate is prepared by following steps: dissolving a lithium source, an iron source, a manganese source, and a phosphorus source in deionized water to obtain a mixed solution and adjusting pH of the mixed solution; then adding polyvinylpyrrolidone to obtain a lithium manganese iron phosphate precursor solution; heating the lithium manganese iron phosphate precursor solution; and drying to obtain a lithium manganese iron phosphate substrate.

3. The lithium manganese iron phosphate positive electrode material according to claim 2, wherein a mass ratio of manganese to iron in the lithium manganese iron phosphate precursor solution is (5.5-6.5) : 4.

4. The lithium manganese iron phosphate positive electrode material according to claim 2, wherein a heating process of the lithium manganese iron phosphate precursor solution is carried out at a heating temperature of 160 °C - 200 °C and a heating duration of 10min-30min.

5. The lithium manganese iron phosphate positive electrode material according to claim 1, wherein a mass ratio of the carbon quantum dots containing amino groups in the coating layer is 0.5-4%.

6. The lithium manganese iron phosphate positive electrode material according to claim 5, wherein the carbon quantum dots containing amino groups are prepared by following steps: mixing organic material containing amino groups with citric acid solution and preparing by hydrothermal reaction to obtain the carbon quantum dots containing amino groups.

7. The lithium manganese iron phosphate positive electrode material according to claim 1 or 6, wherein a particle size of the carbon quantum dots containing amino groups is 1.5 - 3.5 nm.

8. A preparation method of a lithium manganese iron phosphate positive electrode material according to any one of claims 1-7, comprising following steps:
step one: mixing the lithium manganese iron phosphate substrate with chitosan in a liquid phase; adding the carbon quantum dots containing amino groups simultaneously; and spray-drying to obtain coated lithium manganese iron phosphate powder; and
step two: drying and grinding the coated lithium manganese iron phosphate powder to obtain an organic polymer-coated lithium manganese iron phosphate precursor; heating up and cooling down the organic polymer-coated lithium manganese iron phosphate precursor to obtain a positive electrode material of lithium manganese iron phosphate powder coated with carbon quantum dots.

9. The preparation method of the lithium manganese iron phosphate positive electrode material according to claim 8, wherein, in a process of heating up and cooling down the organic polymer-coated lithium manganese iron phosphate precursor, temperature is first raised to 500 °C - 900 °C at a heating speed of 1 °C/min - 35 °C/min, then thermally insulated and kept for 1 hour to 16 hours, and then cooled down to room temperature at a cooling speed of 1 °C/min - 35 °C/min.

10. A positive electrode sheet, wherein the positive electrode sheet comprises a lithium manganese iron phosphate positive electrode material according to any one of claims 1-7.

11. A lithium cell, wherein the lithium cell comprises a positive electrode sheet, the positive electrode sheet comprises a positive electrode material, and the positive electrode material is the lithium manganese iron phosphate positive electrode material according to claim 10.
